# EUROPÄISCHE PATENTSCHRIFT

(11) **EP 0 779 748 B1**
(45) Veröffentlichungstag und Bekanntmachung des Hinweises auf die Patenterteilung: **10.09.2003**
(21) Anmeldenummer: 96119876.9
(22) Anmeldetag: 11.12.1996
(51) Int. Cl.: H04Q 1/14, H05K 5/00

(54) **Aufnahmeeinrichtung und Verfahren**
Holding device and method
Dispositif de retenue et procédé

(30) Priorität: 14.12.1995 DE 19546778
(43) Veröffentlichungstag der Anmeldung: 18.06.1997
(73) Patentinhaber: Quante Aktiengesellschaft, 42109 Wuppertal (DE)
(72) Erfinder: Höschler, Peter, 42553 Velbert (DE); Kübelstein, Ralf, 42109 Wuppertal (DE)
(74) Vertreter: Füchsle, Klaus, Dipl.-Ing.

(56) Entgegenhaltungen:
- DE-A- 3 813 078
- FR-A- 2 321 794

## Beschreibung

Die vorliegende Erfindung betrifft Aufnahmeeinrichtungen, die zur Aufnahme von Anschlußleisten der Telekommunikationstechnik dienen, sowie ein Verfahren zur Herstellung von Aufnahmeeinrichtungen.

In der Telekommunikations- und Datentechnik tritt häufig die Notwendigkeit auf, spezielle Schaltungen und Verbindungen zwischen Übertragungskabeln zu realisieren bzw. diese zu bündeln oder zu verteilen. Zum Beispiel müssen bei umfangreichen Telefonanlagen mehrere Nebenstellen an ein ankommendes Fernmeldekabel angeschlossen werden. Für diese Verteilung auf Nebenstellen sind üblicherweise sogenannte Verteilereinrichtungen vorgesehen, in denen Anschlußleisten für die Verbindungen zwischen den verschiedenen Kabeln sorgen.

Diese Anschlußleisten müssen für die zuverlässige und dauerhafte Funktion der Verteilereinrichtungen sicher an einem Element der Verteilereinrichtung befestigt werden. Diese Befestigung geschieht in herkömmlicher Weise z.B. durch Schrauben, durch welche die Anschlußleisten auf dem entsprechenden Element der Verteilereinrichtung gehalten werden. Diese Befestigungstechnik erfordert aber nicht nur Schrauben als gesonderte Verbindungselemente, sondern führt auch zu einem hohen Montageaufwand.

Dieser Montageaufwand wurde in der Vergangenheit dadurch reduziert, daß insbesondere bei andersartigen Anschlußleisten durch Rasteinrichtungen ein einfaches Einstecken der Anschlußleisten in entsprechende Öffnungen ermöglicht wurde. Es sind insbesondere Öffnungen bekannt, die in einer Ebene mit der Aufsteckrichtung liegen, so daß seitliche Ausformungen an den Rasteinrichtungen in diese Öffnungen einrasten. Üblicherweise sind die Öffnungen so bemessen, daß sie jeweils die Aufnahme einer einzigen Anschlußleiste ermöglichen, so daß diese im befestigten Zustand nicht mehr verschiebbar ist.

Eine derartige Anordnung ist beispielsweise aus der DE 28 11 812 C2 bekannt. Hierbei sind an einer wannenförmigen Aufnahmeeinrichtung mehrere Laschen mit einer jeweils weitgehend viereckigen Öffnung angebracht. An den Anschlußleisten sind seitliche Rasthaken ausgebildet, die im angebrachten Zustand nach innen in die Öffnung der benützten Lasche eingreifen und somit ein Abziehen der Anschlußleiste verhindern.

Aus der FR 2 321 794 A ist eine Aufnahmeeinrichtung für leistenförmige Bauteile bekannt, die abgewinkelte Ränder mit geraden, fortlaufenden Außenkanten aufweist. Im Bereich der Abwinklungen sind jeweilige Öffnungen gestanzt, die hinsichtlich ihrer Abmessungen den Rasthaken der aufzurastenden Anschlußleisten entsprechen. Somit ist ein Verschieben der leistenförmigen Bauteile nicht möglich. Ferner sind aus der DE 38 13 078 A1 Anschlußleisten mit nach außen vorstehenden Rasthaken bekannt, die mit den Rändern von bereichsweise horizontal ausgerichteten Ausnehmungen in Eingriff stehen. Bei den beschriebenen Anordnungen ist es nicht möglich, die Anschlußleisten im angebrachten Zustand zu verschieben.

Ein Verschieben der Anschlußleisten ist aber wünschenswert, weil dadurch zum einen die Montage weiter vereinfacht wird und zum anderen das Beschalten und Rangieren der Anschlußleisten deutlich erleichtert wird. Um ein Verschieben der Anschlußleisten zu ermöglichen, wurden einerseits Rundstangen vorgeschlagen, auf welche die Anschlußleisten aufgesteckt werden können. Eine derartige Anordnung ist beispielsweise aus der DE 37 28 368 C1 bekannt. In ähnlicher

Weise sind bekannte Aluminiumprofile gestaltet, die ebenfalls ein Aufstecken und nachfolgendes Verschieben der Anschlußleisten erlauben, wobei derartige Profile unnötig aufwendig gestaltet sind bzw. einer eigenen Form der Anschlußleisten bedürfen. Insbesondere die Verwendbarkeit neuartiger Aufnahmeeinrichtungen für bekannte Anschlußleisten ist jedoch äußerst erwünscht.

Ausgehend von den beschriebenen Unzulänglichkeiten bekannter Aufnahmeeinrichtungen für Anschlußleisten liegt der vorliegenden Erfindung das technische Problem (die Aufgabe) zugrunde, eine Aufnahmeeinrichtung zur Verfügung zu stellen, die eine sichere und dennoch verschiebbare Befestigung der Anschlußleisten ermöglicht und gleichzeitig wenig aufwendig gestaltet ist. Ferner soll ein Verfahren zur Herstellung von Aufnahmeeinrichtungen entsprechend den in dem Anspruch 1 beschriebenen drei Ausführungsformen angegeben werden.

Die Lösung dieser Aufgabe wird durch die Merkmale des Anspruchs 1 beziehungsweise des Anspruchs 14 erreicht.

Demzufolge zeichnet sich die erfindungsgemäße Aufnahmeeinrichtung dadurch aus, daß in der Nähe eines geraden Randes eines dünnwandigen Abschnitts und parallel zu diesem Rand eine geradlinige Kante gestanzt oder durchgesetzt oder durch Umschlagen eines Randbereichs ausgebildet ist. Mit "Durchsetzen" wird ein Verfahren bezeichnet, bei dem das Material bis zu einer Tiefe abgeschert wird, die nahe an die Materialdicke heranreicht. Dennoch bleibt in dem derart abgescherten Bereich zwischen den angrenzenden Abschnitten Material erhalten, das die angrenzenden Abschnitte weiterhin zusammenhält.

Alle genannten Verfahren zeichnen sich dadurch aus, daß sie einen geringen Herstellungsaufwand verursachen, so daß die erfindungsgemäße Aufnahmeeinrichtung kostengünstig zu fertigen ist. Insbesondere bei der Verwendung von Blech, das als Material für den dünnwandigen Abschnitt bevorzugt wird, sind die drei genannten Verfahren hervorragend für die wirtschaftliche Herstellung der Aufnahmeeinrichtung geeignet.

Durch die Kante können mit vergleichsweise geringerem Montageaufwand Anschlußleisten mittels Rastelementen auf der erfindungsgemäßen Aufnahmeeinrichtung befestigt werden. Dazu müssen diese entlang des dünnwandigen Bereichs zwischen Rand und Kante aufgesteckt werden, bis die Rastelemente mit einem daran ausgebildeten Vorsprung in die Kante, bzw. in den an die Kante angrenzenden Überhang und die an dieser Stelle ausgebildete Ausnehmung einrasten. Der Vorsprung an den Rastelementen verhindert im aufgesteckten Zustand ein Herausziehen der Anschlußleiste. Dadurch, daß die Kante parallel zum Rand verläuft, wird eine Verschiebung der aufgesteckten Anschlußleisten ermöglicht, und das Beschalten und Rangieren erleichtert.

Ferner ist bei einer derart ausgebildeten Aufnahmeeinrichtung auch das Anbringen eines Überspannungsschutzes sehr leicht möglich. Ein derartiger Überspannungsschutz kann über die Aufnahmeeinrichtung mit Erde verbunden werden, indem eine aufsteckbare Einrichtung des Überspannungsschutzes auf die Aufnahmeeinrichtung aufgesteckt und mit dieser leitend verbunden wird. Außerdem können an die erfindungsgemäße Aufnahmeeinrichtung ohne großen Aufwand Kabelführungsbügel angeformt werden, oder sie können unter Verwendung der erfindungsgemäßen Kante auf die Aufnahmeeinrichtung aufgesteckt oder angerastet werden. Somit ist die Aufnahmeeinrichtung leicht um derartige Bügel zu erweitern, die eine übersichtliche und überschaubare Führung der Kabel gewährleisten.

Die erfindungsgemäße Aufnahmeeinrichtung weist ferner den Vorteil auf, daß sie bei Verteilereinrichtungen in einfacher Weise als Bestandteil des Grundelements, einer Montageplatte oder der Rückwand ausgebildet werden kann. Dazu muß lediglich der dünnwandige Abschnitt zum Beispiel durch dreiseitiges Ausstanzen und anschließendes Abkanten an den beschriebenen Elementen ausgebildet werden, und dann mit der erfindungsgemäßen Kante versehen werden.

Bevorzugte Ausführungsformen finden sich in den abhängigen Ansprüchen.

Obwohl für die erfindungsgemäße Aufnahmeeinrichtung grundsätzlich alle Materialien denkbar sind, die eine ausreichende Stabilität und die Möglichkeit der Ausbildung der beschriebenen Kante bieten, wird als Material für die Aufnahmeeinrichtung Blech bevorzugt. Die Verwendung von Blech sorgt zum einen für eine gute Stabilität und ermöglicht zum anderen die problemlose Herstellung der Kante mit Hilfe der genannten kostengünstigen Verfahren.

Es ist ferner vorteilhaft, wenn die Kante nicht bis zu den Rändern verläuft, welche die Richtung der Kante schneiden, oder wenn die Kante zumindest eine Unterbrechung aufweist. Durch diese Ausführungsform wird verhindert, daß die Anschlußleisten seitlich von der Aufnahmeeinrichtung heruntergeschoben werden können. Außerdem können durch die Ausbildung von Unterbrechungen der Kante Bereiche festgelegt werden, in denen die Anschlußleiste verschiebbar ist, wobei gleichzeitig eine Verschiebung in andere Bereiche ausgeschlossen werden kann, wenn dies erforderlich ist.

Als besonders vorteilhaft für die Ausbildung der erfindungsgemäßen Kante hat es sich erwiesen, einen streifenförmigen Bereich von der Oberfläche zum unteren Rand der Kante geneigt auszubilden. In diesem Fall wird in vorteilhafter Weise ein vollständiges Abtrennen von Material durch die Ausbildung der Kante verhindert, indem ein Rand des streifenförmigen Bereichs lediglich durch Biegen oder Abkanten leicht verformt wird.

Alternativ zur Ausbildung eines geneigten streifenförmigen Bereichs ist es denkbar, in der Aufnahmeeinrichtung zumindest eine rechteckige, streifenförmige Vertiefung auszubilden. In dieser Ausführungsform bildet ein Rand der beschriebenen Vertiefung(en) die erfindungsgemäße Kante zum Einrasten der Rastelemente. Insbesondere bei entsprechend geformten Rastnasen, die unterhalb des Vorsprungs, der ein Herausziehen verhindert, verbreitert ausgebildet sind, erweist es sich als zweckmäßig, die Kante der Aufnahmeeinrichtung als Kante einer Vertiefung zu stanzen, um den beschriebenen Rastnasen Platz zu bieten.

Bei dieser Ausführungsform ist der vorteilhafte Anschlag der Kante im Abstand von den seitlichen Rändern besonders einfach dadurch zu realisieren, daß sich die ausgebildeten Vertiefungen nicht bis zu den Rändern erstrecken, welche die Kante schneiden.

Bevorzugt wird in diesem Fall und auch bei der Ausbildung eines geneigten streifenförmigen Bereichs eine Höhe der Kante, die bis zu 90% der Dicke des dünnwandigen Abschnitts beträgt. Dadurch ist zum einen eine ausreichende Höhe der Kante zum sicheren Einrasten des haltenden Vorsprungs gewährleistet, andererseits ist eine völlige Durchdringung des dünnwandigen Abschnitts und die Ausbildung einer vollständigen Öffnung mit negativen Folgen für die Stabilität der Aufnahmeeinrichtung nicht zu befürchten.

Da dennoch, z.B. aufgrund von Werkzeug- und Werkstücktoleranzen nicht auszuschließen ist, daß die Kante in eine Tiefe gestanzt wird, die im Bereich der Dicke des dünnwandigen Abschnitts, also z.B. der Blechdicke liegt, ist es für die Gewährleistung der Stabilität vorteilhaft, die Kante an zumindest einer Stelle zu unterbrechen und an diesen Stelle(n) für eine feste Verbindung mit dem Bereich in der Umgebung der Kante zu sorgen. Dies wird z.B. dadurch erreicht, daß der außerhalb der Stanzung liegende Bereich in der Umgebung einer derartigen Unterbrechung vertieft ausgebildet wird, um die Verschiebung der Anschlußleiste über die Unterbrechung hinweg zu gewährleisten und ferner um eine Verbindung des Materials über die Kante hinweg an den vertieften, jedoch nicht gestanzten Stellen aufrechtzuerhalten.

Als zweckmäßig hat es sich bei dieser Ausführungsform erwiesen, diese vertieften Bereiche halbkreisförmig auszubilden.

Für die erfindungsgemäße Kante kann auch dadurch gesorgt werden, daß in der Aufnahmeeinrichtung zumindest eine längliche und parallel zum Rand verlaufende Ausnehmung vorgesehen ist. Diese Ausführungsform eignet sich besonders gut für Anwendungsfälle, in denen eine oder mehrere vergleichsweise kurze Kanten zum Einrasten der Rastelemente ausreichend sind, und deshalb trotz der Schwächung des Blechs durch die Ausnehmung die Stabilität nicht gefährdet ist. Insbesondere bei der Verwendung von Blech für die Herstellung der Aufnahmeeinrichtung kann eine derartige Ausnehmung besonders einfach durch Ausstanzen hergestellt werden.

Wenn die erfindungsgemäße Kante durch Umschlagen des Randbereichs ausgebildet wird, so ist es vorteilhaft, das Material in diesem Randbereich um 180° umzuschlagen, so daß das Material in diesem Bereich gedoppelt ist. Der vormalige obere Rand des dünnwandigen Abschnitts bildet dann die Kante, in welche die Rasteinrichtungen einrasten können. Als zusätzlicher Vorteil ergibt sich in diesem Fall die Vermeidung von scharfen Kanten im obersten Bereich der Aufnahmeeinrichtung, der nunmehr durch den Materialumschlag gerundet ausgebildet ist.

Für vorteilhafte Anschläge insbesondere an den seitlichen Rändern kann bei dieser Ausführungsform dadurch gesorgt werden, daß schmale Abschnitte nicht umgeschlagen werden, und somit als vorstehende Nasen Anschläge bilden, die insbesondere ein seitliches Abziehen der Anschlußleisten verhindern.

In vorteilhafter Weise sind die beschriebenen Ausführungsformen der erfindungsgemäßen Aufnahmeeinrichtung für die Bildung von sogenannten Befestigungswannen zu verwenden, die gemäß einem weiteren Aspekt der Erfindung aus zwei parallel zueinander angeordneten erfindungsgemäßen Aufnahmeeinrichtungen bestehen, die durch einen Boden miteinander verbunden sind. Die für die Befestigung notwendigen Kanten sind dabei parallel zueinander und vorzugsweise nach außen gerichtet angeordnet, so daß eine längliche Anschlußleiste, die an ihren beiden Enden mit entsprechenden Rastelementen versehen ist, auf die parallel angeordneten Aufnahmeeinrichtungen aufgesteckt werden kann und dann sicher und verschiebbar befestigt ist. Ferner läßt sich in diesem Fall der Boden für die Führung der Kabel oder für die Anbringung von Endverschlüssen an die Befestigungswanne nutzen.

Dabei wird eine Ausführungsform bevorzugt, bei der die beiden Aufnahmeeinrichtungen und der Boden einstückig miteinander verbunden sind.

Nach einem weiteren Aspekt der vorliegenden Erfindung wird ein Verfahren zur Herstellung von Aufnahmeeinrichtungen in entsprechend den in dem Anspruch 1 beschriebenen drei Ausführungsformen vorgestellt.

Im wesentlichen ist zur Herstellung der erfindungsgemäßen Aufnahmeeinrichtung das Zuschneiden eines Blechrohlings erforderlich, der zumindest einen geraden Rand aufweist und ferner vorzugsweise rechteckig ist und in den in einem zweiten Schritt eine Kante gestanzt oder durchgesetzt oder durch Umschlagen des Randbereichs ausgebildet wird, die sich, wie oben beschrieben, in der Nähe von und parallel zu dem geraden Rand des Blechrohlings befindet. Diese beiden Verfahrensschritte sorgen mit wenig aufwendigen Methoden für die einfache und kostengünstige Herstellung der beschriebenen Aufnahmeeinrichtung. Die Ausbildung von Anschlägen im Abstand von den seitlichen Rändern kann in einfacher Weise dadurch realisiert werden, daß die Stanzung oder Durchsetzung nicht bis zu diesen Rändern erfolgt, oder indem schmale Abschnitte nicht umgeschlagen werden, so daß sie zur Ausbildung von Anschlägen stehen bleiben.

Auch die Ausbildung der beschriebenen streifenförmigen Vertiefungen, bevorzugt mit einer Stanz- oder Durchsetztiefe von bis zu 90% der Blechdicke, kann in einem einzigen Verfahrensschritt nach dem Zuschneiden eines Blechrohlings erfolgen. Falls der konkrete Anwendungsfall dies erlaubt, gestaltet sich ferner das Stanzen von einer oder mehreren Ausnehmungen parallel zum Rand des Blechrohlings besonders einfach.

Die beschriebenen Vertiefungen im Bereich von Unterbrechungen der Kante können in einfacher Weise durch ein Prägen hergestellt werden und erfordern ein einziges, entsprechend kombiniertes Stanz- und Prägewerkzeug.

Ferner wurde bereits ein Verfahren erprobt, bei dem ein rechteckiger Blechrohling an zwei gegenüberliegenden Seiten mit der beschriebenen Kante versehen wird, und dann an diesen beiden Seiten in einer Entfernung vom Rand, die größer ist als die Entfernung vom Rand zur Kante, abgekantet wird und dadurch in eine Wannenform geformt wird. Durch dieses Verfahren können die besonders zweckmäßigen Befestigungswannen hergestellt werden, die einen wesentlich einfacheren Aufbau aufweisen als die bislang bekannten Profile.

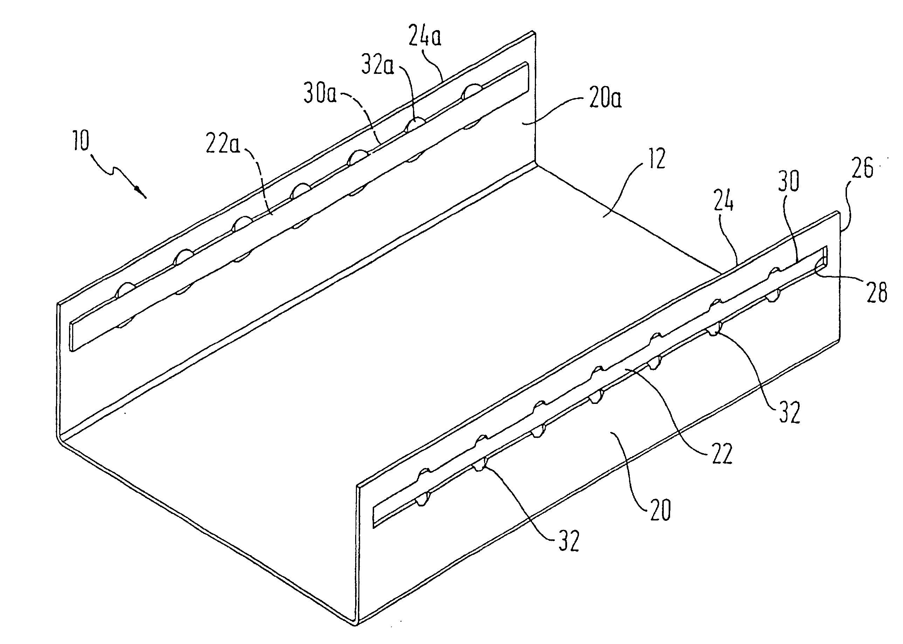

Nachfolgend wird die Erfindung rein beispielhaft unter Bezugnahme auf die Zeichnung beschrieben.

Die Figur zeigt die erfindungsgemäße Aufnahmeeinrichtung 20 als Seitenwand einer sogenannten Befestigungswanne 10, die aus zwei derartigen Aufnahmeeinrichtungen 20, 20a und einem Boden 12 besteht. Bei der gezeigten Ausführungsform ist die Kante, in die entsprechende Rastelemente einrasten, jeweils als obere Kante 30, 30a einer in der Aufnahmeeinrichtung 20, 20a ausgebildeten Vertiefung 22, 22a vorgesehen. Es ist zu erkennen, daß die Kanten 30, 30a parallel zum oberen Rand 24, 24a der Aufnahmeeinrichtung 20, 20a verlaufen.

Dadurch, daß die Vertiefung 30 nicht bis zu den seitlichen Rändern 26 der Aufnahmeeinrichtung 20 ausgebildet ist, ist an beiden Enden der Vertiefung ein Anschlag 28 ausgebildet, der ein seitliches Herausschieben der (nicht gezeigten) Anschlußleiste verhindert. Ferner sind Bereiche 32 zu erkennen, in denen die Kante 30 unterbrochen ist, wobei die Umgebung dieser Unterbrechungen 32 auf das Niveau der Vertiefung 22 geprägt sind. Diese Unterbrechungen 32 gewährleisten die Stabilität der Aufnahmeeinrichtung 20, indem für eine Verbindung zwischen vertieftem und nicht vertieftem Material gesorgt ist. Gleichzeitig wird durch die Prägung in diesem Bereich gewährleistet, daß ein Verschieben der aufgesteckten Anschlußleisten im gesamten Bereich der Vertiefung 22 möglich ist.

Anhand der in der Zeichnung links gezeigten Aufnahmeeinrichtung 20a wird deutlich, wie das vertiefte Material 32a auf der Innenseite der Aufnahmeeinrichtungen 20, 20a hervorsteht. Durch die Ausbildung der Kante 30, die mit einer Stanz- oder Durchsetztiefe von bis zu 90% der Blechdicke ausgebildet werden kann, ist ein vollständiges Ausstanzen der Vertiefung 22 aufgrund von Material- und Werkzeugtoleranzen nicht ganz auszuschließen. Dies wird durch die geprägten Vertiefungen 32, 32a, die das Material lediglich verformen und nicht trennen, verhindert.

Bei der Installation werden die aufzunehmenden Anschlußleisten oder eigene Rastelemente in einer Richtung parallel zu den Seitenrändern 26 der Aufnahmeeinrichtung 20 aufgesteckt, bis entsprechende Rastelemente an den Anschlußleisten in die Kante 30 einrasten. In der eingesteckten und eingerasteten Stellung verhindert ein Vorsprung an den Rastelementen, der mit der erfindungsgemäßen Kante 30 im Eingriff steht, ein Herausziehen der Anschlußleisten. Durch Ausbildung dieser Vorsprünge über eine Breite, die größer ist als die Breite der Vertiefungen 32, ist ferner gewährleistet, daß die Anschlußleisten auch dann nicht abgezogen werden können, wenn sie sich an den Stellen mit Vertiefungen 32 befinden. Gleichzeitig gewährleisten die Vertiefungen 32 die Verschiebbarkeit der aufgesteckten Anschlußleisten über die gesamte Breite der Kante 30 zwischen den Anschlägen 28.

Neben der in der Figur gezeigten Ausführungsform wird eine ebenso sichere und leicht zu montierende Anbringung von Anschlußleisten durch Ausführungsformen erreicht, bei denen der im gezeigten Beispiel vertiefte Bereich 22 zur Ausbildung einer länglichen Ausnehmung vollständig ausgestanzt wird, oder bei der dieser Bereich 22 von der Oberfläche des Blechs zur Unterseite der Kante 30 hin geneigt verläuft. Ebenso könnte eine Kante dadurch ausgebildet werden, daß der Randbereich in der Umgebung des Randes 24 nach außen umgeschlagen wird, so daß der Rand 24 die erfindungsgemäße Kante bildet.

## Patentansprüche

1. Aufnahmeeinrichtung zur Aufnahme von Anschlußleisten der Telekommunikationstechnik mit einem dünnwandigen Abschnitt, vorzugsweise aus Blech, der zumindest einen geraden Rand (24) aufweist,
**dadurch gekennzeichnet, daß** in der Nähe von und parallel zu dem geraden Rand (24) eine geradlinige Kante (30) gestanzt oder durchgesetzt oder durch Umschlagen des Randbereichs ausgebildet ist, so daß zumindest eine Anschlußleiste derart aufrastbar ist, daß sie an der Aufnahmeeinrichtung verschiebbar ist.

2. Aufnahmeeinrichtung nach Anspruch 1,
**dadurch gekennzeichnet, daß** die Kante (30) nicht bis zu den Rändern (26) verläuft, welche die Richtung der Kante (30) schneiden, oder daß die Kante (30) zumindest eine Unterbrechung aufweist.

3. Aufnahmeeinrichtung nach zumindest einem der vorstehenden Ansprüche,
**dadurch gekennzeichnet, daß** ein von der Oberfläche zum unteren Rand der Kante (30) geneigt verlaufender, streifenförmiger Bereich ausgebildet ist, der sich in größerer Entfernung vom Rand (24) befindet als die Kante (30).

4. Aufnahmeeinrichtung nach zumindest einem der vorstehenden Ansprüche,
**dadurch gekennzeichnet, daß** diese zumindest eine rechteckige, streifenförmige Vertiefung (22) aufweist.

5. Aufnahmeeinrichtung nach Anspruch 4,
**dadurch gekennzeichnet, daß** sich die Vertiefung(en) (22) nicht bis zu den Rändern (26) erstreckt oder erstrecken, welche die Richtung der Kante (30) schneiden.

6. Aufnahmeeinrichtung nach zumindest einem der vorstehenden Ansprüche,
**dadurch gekennzeichnet, daß** die Höhe der Kante (30) bis zu 90% der Dicke des dünnwandigen Abschnitts beträgt.

7. Aufnahmeeinrichtung nach zumindest einem der vorstehenden Ansprüche,
**dadurch gekennzeichnet, daß** die Kante (30) unterbrochen ist und der Bereich in der Umgebung der Unterbrechung (32) vertieft ist, wobei die Tiefe im Bereich der Kante (30) mit der Tiefe der Kante (30) in etwa übereinstimmt und in zunehmender Entfernung von der Kante (30) geringer wird.

8. Aufnahmeeinrichtung nach Anspruch 7,
**dadurch gekennzeichnet, daß** die vertieften Bereiche halbkreisförmig ausgebildet sind.

9. Aufnahmeeinrichtung nach zumindest einem der Ansprüche 1 oder 2,
**dadurch gekennzeichnet, daß** diese zumindest eine längliche Ausnehmung aufweist, die sich nicht bis zu den Rändern (26) erstreckt, welche die Richtung der Ausnehmung schneiden.

10. Aufnahmeeinrichtung nach zumindest einem der Ansprüche 1 oder 2, **dadurch gekennzeichnet, daß** der Randbereich um 180° umgeschlagen wird.

11. Aufnahmeeinrichtung nach Anspruch 10, **dadurch gekennzeichnet, daß** schmale Abschnitte des Randbereichs vorzugsweise im Bereich der seitlichen Ränder (26) zur Ausbildung von Anschlägen stehen gelassen werden.

12. Befestigungswanne mit zwei Aufnahmeeinrichtungen nach zumindest einem der Ansprüche 1 bis 11,
**dadurch gekennzeichnet, daß** die Aufnahmeeinrichtungen (20, 20a) parallel zueinander angeordnet sind, so daß die Kanten (30, 30a) parallel zueinander verlaufen und vorzugsweise nach außen gerichtet sind, wobei die beiden Aufnahmeeinrichtungen (20, 20a) ferner durch einen Boden (12) verbunden sind.

13. Befestigungswanne nach Anspruch 12,
**dadurch gekennzeichnet, daß** die Aufnahmeeinrichtungen (20, 20a) und der Boden (12) einstückig miteinander verbunden sind.

14. Verfahren zur Herstellung einer Aufnahmeeinrichtung nach zumindest einem der Ansprüche 1 bis 11 zur Aufnahme von Anschlußleisten mittels Rastelementen, **gekennzeichnet durch** die Schritte:
a) Zuschneiden eines Blechrohlings, der zumindest einen geraden Rand aufweist und vorzugsweise rechteckig ist,
b) Stanzen einer Kante, oder
b') Durchsetzen einer Kante oder
b") Ausbilden einer Kante **durch** Umschlagen eines Randbereichs
in der Nähe von und parallel zu dem geraden Rand des Blechrohlings.

15. Verfahren nach Anspruch 14,
**dadurch gekennzeichnet, daß**
die Kante nicht bis zu den Rändern gestanzt wird, welche die Richtung der gestanzten Kante schneiden, oder daß die Stanzung zumindest einmal unterbrochen ist, so daß zumindest ein Anschlag ausgebildet ist.

16. Verfahren nach zumindest einem der Ansprüche 14 oder 15,
**dadurch gekennzeichnet, daß** ein streifenförmiger Bereich in größerer Entfernung zum Rand als die Kante parallel zur Kante zu einer leichten Neigung abgekantet wird.

17. Verfahren nach zumindest einem der Ansprüche 14 bis 16,
**dadurch gekennzeichnet, daß**
die Kante als Kante einer rechteckigen, streifenförmigen Vertiefung gestanzt wird.

18. Verfahren nach Anspruch 17,
**dadurch gekennzeichnet, daß**
an zumindest einem, vorzugsweise beiden Enden der Vertiefung ein Anschlag festgelegt ist, indem sich die Vertiefung nicht bis zu den Rändern erstreckt, welche die Richtung der Vertiefung schneiden.

19. Verfahren nach zumindest einem der Ansprüche 14 bis 18,
**dadurch gekennzeichnet, daß**
die Stanztiefe bis zu 90% der Blechdicke beträgt.

20. Verfahren nach zumindest einem der Ansprüche 14 bis 19,
**dadurch gekennzeichnet, daß**
die Stanzung zumindest einmal unterbrochen ist, und der außerhalb der Stanzung liegende Bereich in der Umgebung der Unterbrechung in eine Tiefe geprägt wird, die im Bereich der Kante mit der Stanztiefe in etwa übereinstimmt und in zunehmender Entfernung von der Kante geringer wird.

21. Verfahren nach Anspruch 20,
**dadurch gekennzeichnet, daß**
die Prägung(en) halbkreisförmig ausgebildet werden.

22. Verfahren nach einem der Ansprüche 14 oder 15,
**dadurch gekennzeichnet, daß**
die Kante als Kante einer länglichen Ausnehmung ausgebildet wird, die parallel zu der Kante des Blechrohlings verläuft und sich nicht bis zu den Rändern erstreckt, welche die Richtung der Ausnehmung schneiden.

23. Verfahren nach einem der Ansprüche 14 oder 15, **dadurch gekennzeichnet , daß** der Randbereich vorzugsweise abschnittsweise um vorzugsweise 180° umgeschlagen wird, und zwischen den Abschnitten und insbesondere am seitlichen Rand schmale Abschnitte als Anschläge stehen gelassen werden.

24. Verfahren nach zumindest einem der Ansprüche 14 bis 23,
**dadurch gekennzeichnet, daß**
ein rechteckiger Blechrohling an zwei gegenüberliegenden Seiten mit der gestanzten oder durchgesetzten oder durch Umschlagen des Randbereichs ausgebildeten Kante versehen wird, an diesen beiden Seiten in einer Entfernung vom Rand, die größer ist als die Entfernung vom Rand zur Kante oder der Vertiefung, abgekantet wird und in eine Wannenform geformt wird, wobei die Kanten vorzugsweise nach außen gerichtet sind.

## Claims

1. A holding device for holding telecommunications terminal connectors, comprising a thin-walled section, preferably of sheet metal, which has at least one straight edge (24),
**characterised in that** a rectilinear edge face (30) is cut or penetrated or formed by folding over the edge region in the vicinity of and parallel to the straight edge (24), so that at least one terminal connector can be clipped on such that it is displaceable on the holding device.

2. A holding device according to Claim 1, **characterised in that** the edge face (30) does not extend as far as the edges (26) which intersect with the direction of the edge face (30), or that the edge face (30) has at least one interruption.

3. A holding device according to at least one of the preceding claims,
**characterised in that** a strip-shaped region which is inclined from the surface to the lower edge of the edge face (30) is formed, which is at a greater distance from the edge (24) than the edge face (30).

4. A holding device according to at least one of the preceding claims,
**characterised in that** it has at least one rectangular, strip-shaped indentation (22).

5. A holding device according to Claim 4, **characterised in that** the indentation(s) (22) does (do) not extend as far as the edges (26) which intersect with the direction of the edge face (30).

6. A holding device according to at least one of the preceding claims,
**characterised in that** the height of the edge face (30) is up to 90% of the thickness of the thin-walled section.

7. A holding device according to at least one of the preceding claims,
**characterised in that** the edge face (30) is interrupted and the region in the vicinity of the interruption (32) is indented, the depth in the region of the edge face (30) corresponding approximately to the depth of the edge face (30) and becoming less as it becomes more distant from the edge face (30).

8. A holding device according to Claim 7, **characterised in that** the indented regions are semicircular.

9. A holding device according to at least one of Claims 1 or 2, **characterised in that** said device has at least one elongate recess which does not extend as far as the edges (26) which intersect with the direction of the recess.

10. A holding device according to at least one of Claims 1 or 2, **characterised in that** the edge region is folded over by 180°.

11. A holding device according to Claim 10, **characterised in that** narrow sections of the edge region preferably in the region of the lateral edges (26) are left to form stops.

12. A fastening tray with two holding devices according to at least one of Claims 1 to 11, **characterised in that** the holding devices (20, 20a) are arranged parallel to each other, so that the edge faces (30, 30a) extend parallel to each other and preferably are directed outwards, the two holding devices (20, 20a) furthermore being connected by a base (12).

13. A fastening tray according to Claim 12, **characterised in that** the holding devices (20, 20a) and the base (12) are joined together in one piece.

14. A method for the production of a holding device according to at least one of Claims 1 to 11 for holding terminal connectors by means of catch elements,
**characterised by** the steps:
a) cutting to size a sheet metal blank which has at least one straight edge and is preferably rectangular,
b) punching an edge face, or
b') penetrating to form an edge face or
b") forming an edge face by turning over a edge region
in the vicinity of and parallel to the straight edge of the sheet metal blank.

15. A method according to Claim 14, **characterised in that** the edge face is not punched as far as the edges which intersect with the direction of the punched edge face, or that the punched area is interrupted at least once, so that at least one stop is formed.

16. A method according to at least one of Claims 14 or 15, **characterised in that** a strip-shaped region at a greater distance from the edge than the edge face is chamfered parallel to the edge face to form a slight inclination.

17. A method according to at least one of Claims 14 to 16, **characterised in that** the edge face is punched as the edge face of a rectangular, strip-shaped indentation.

18. A method according to Claim 17, **characterised in that** a stop is established on at least one and preferably both ends of the indentation by having the indentation not extend as far as the edges which intersect with the direction of the indentation.

19. A method according to at least one of Claims 14 to 18, **characterised in that** the punching depth is up to 90% of the sheet thickness.

20. A method according to at least one of Claims 14 to 19, **characterised in that** the punched area is interrupted at least once, and the region located outside the punched area is embossed in the vicinity of the interruption to a depth which in the region of the edge face approximately matches the punching depth and becomes less as its distance from the edge face increases.

21. A method according to Claim 20, **characterised in that** the embossing(s) are semicircular in shape.

22. A method according to one of Claims 14 or 15, **characterised in that** the edge face is formed as the edge face of an elongate recess which extends parallel to the edge face of the sheet metal blank and does not extend as far as the edges which intersect with the direction of the recess.

23. A method according to one of Claims 14 or 15, **characterised in that** the edge region is folded over preferably in sections and preferably by 180°, and narrow sections are left as stops between the sections and in particular on the lateral edge.

24. A method according to at least one of Claims 14 to 23, **characterised in that** a rectangular sheet metal blank is provided on two opposite sides with the edge face which is punched or penetrated or formed by folding over the edge region, is chamfered on these two sides at a distance from the edge which is greater than the distance from the edge to the edge face or the indentation, and is formed into a tray shape, the edge faces preferably being directed outwards.

## Revendications

1. Dispositif de retenue destiné à recevoir des plaques à bornes de télécommunication avec une portion à paroi mince, de préférence en tôle, qui présente au moins un bord droit (24),
**caractérisé en ce qu'**une arête rectiligne (30) est obtenue à proximité du bord droit (24) et parallèlement à celui-ci par estampage ou emboutissage ou par rabattage de la région marginale, de façon qu'au moins une plaque à bornes puisse être enclipsée avec capacité de translation sur le dispositif de retenue.

2. Dispositif de retenue selon la revendication 1, **caractérisé en ce que** l'arête (30) ne s'étend pas jusqu'aux bords (26) qui coupent la direction de l'arête (30) ou **en ce que** l'arête (30) présente au moins une interruption.

3. Dispositif de retenue selon l'une au moins des revendications précédentes, **caractérisé en ce qu'**est formée une région en forme de bande inclinée depuis la surface jusqu'au bord inférieur de l'arête (30), ladite région étant plus éloignée du bord (24) que l'arête (30).

4. Dispositif de retenue selon l'une au moins des revendications précédentes, **caractérisé en ce qu'**il présente au moins une empreinte (22) rectangulaire en forme de bande.

5. Dispositif de retenue selon la revendication 4, **caractérisé en ce que** le ou les empreintes (22) ne s'étendent pas jusqu'aux bords (26) coupant la direction de l'arête (30).

6. Dispositif de retenue selon l'une au moins des revendications précédentes, **caractérisé en ce que** la hauteur de l'arête (30) peut atteindre jusqu'à 90 % de l'épaisseur de la portion à paroi mince.

7. Dispositif de retenue selon l'une au moins des revendications précédentes, **caractérisé en ce que** l'arête (30) est interrompue et **en ce que** la région située au niveau de l'interruption (32) est en retrait, la profondeur du retrait au niveau de l'arête (30) coïncidant sensiblement avec la profondeur de l'arête (30) et diminuant à mesure que l'on s'éloigne de l'arête (30).

8. Dispositif de retenue selon la revendication 7, **caractérisé en ce que** les régions en retrait affectent une forme semi-circulaire.

9. Dispositif de retenue selon l'une au moins des revendications 1 et 2, **caractérisé en ce qu'**il présente au moins un évidement oblong qui ne s'étend pas jusqu'aux bords (26) coupant la direction de l'évidement.

10. Dispositif de retenue selon l'une au moins des revendications 1 et 2, **caractérisé en ce que** la région marginale est rabattue de 180°.

11. Dispositif de retenue selon la revendication 10, **caractérisé en ce que** des portions étroites de la région marginale, de préférence au niveau des bords latéraux (26), sont conservées verticales pour former des butées.

12. Boîtier de fixation à deux dispositifs de retenue selon l'une au moins des revendications 1 à 11, **caractérisé en ce que** les dispositifs de retenue (20, 20a) sont agencés parallèlement l'un à l'autre de façon que les arêtes (30, 30a) s'étendent parallèlement entre elles et soient de préférence orientées vers l'extérieur, les deux dispositifs de retenue (20, 20a) étant en outre reliés par un fond (12).

13. Boîtier de fixation selon la revendication 12, **caractérisé en ce que** les dispositifs de retenue (20, 20a) et le fond (12) sont reliés monobloc.

14. Procédé de fabrication d'un dispositif de retenue selon l'une au moins des revendications 1 à 11, destiné à recevoir des plaques à bornes au moyen d'éléments d'enclipsage, **caractérisé par** les étapes suivantes :
a) Découpage à dimension d'une ébauche en tôle présentant au moins un bord droit et affectant de préférence une forme rectangulaire,
b) Réalisation d'une arête par estampage ou
b') Réalisation d'une arête par emboutissage ou
b'') Formation d'une arête par rabattage d'une région marginale
à proximité de et parallèlement au bord droit de l'ébauche en tôle.

15. Procédé selon la revendication 14, **caractérisé en ce que** l'arête obtenue par estampage ne s'étend pas jusqu'aux bords coupant la direction de ladite arête ou **en ce que** l'estampage présente au moins une interruption de façon à obtenir au moins une butée.

16. Procédé selon l'une au moins des revendications 14 et 15, **caractérisé en ce qu'**une région en forme de bande plus éloignée du bord que l'arête est repliée parallèlement à l'arête avec une légère inclinaison.

17. Procédé selon l'une au moins des revendications 14 à 16, **caractérisé en ce que** l'arête obtenue par estampage consiste en une arête d'une empreinte rectangulaire, en forme de bande.

18. Procédé selon la revendication 17, **caractérisé en ce qu'**une butée est définie au niveau d'une extrémité au moins de l'empreinte et de préférence au niveau de ses deux extrémités par le fait que l'empreinte ne s'étend pas jusqu'aux bords coupant la direction de l'empreinte.

19. Procédé selon l'une au moins des revendications 14 à 18, **caractérisé en ce que** la profondeur d'estampage peut atteindre 90 % de l'épaisseur de la tôle.

20. Procédé selon l'une au moins des revendications 14 à 19, **caractérisé en ce que** l'estampage présente au moins une interruption, et **en ce que** la région située à l'extérieur de l'estampage et au niveau de l'interruption est estampée sur une profondeur qui, au niveau de l'arête, coïncide sensiblement avec la profondeur d'estampage et qui diminue à mesure que l'on s'éloigne de l'arête.

21. Procédé selon la revendication 20, **caractérisé en ce que** le ou les estampages affectent une forme semi-circulaire.

22. Procédé selon l'une quelconque des revendications 14 et 15, **caractérisé en ce que** l'arête se présente sous la forme d'une arête d'un évidement oblong qui est ménagé parallèlement à l'arête de l'ébauche de tôle et ne s'étend pas jusqu'aux bords coupant la direction de l'évidement.

23. Procédé selon l'une quelconque des revendications 14 et 15, **caractérisé en ce que** la région marginale est rabattue d'environ 180°, de préférence par portions, et **en ce qu'**entre les portions et en particulier sur le bord latéral, des portions étroites sont conservées verticales pour former des butées.

24. Procédé selon l'une au moins des revendications 14 à 23, **caractérisé en ce qu'**une ébauche de tôle rectangulaire est dotée, sur deux côtés opposés, de l'arête réalisée par estampage ou emboutissage ou par rabattage de la région marginale, **en ce qu'**elle est repliée au niveau de ces deux côtés à une distance du bord qui est supérieure à la distance séparant le bord de l'arête ou de l'empreinte, et est mise en forme de boîtier, les arêtes étant de préférence orientées vers l'extérieur.
